# EUROPÄISCHE PATENTSCHRIFT

(11) **EP 3 008 712 B1**
(45) Veröffentlichungstag und Bekanntmachung des Hinweises auf die Patenterteilung: **07.07.2021**
(21) Anmeldenummer: 14728972.2
(22) Anmeldetag: 06.06.2014
(51) Int. Cl.: B60W 30/095, G08G 1/16, B60T 7/22, B60T 8/1755, B60T 7/12, B60W 30/09

(54) **VERFAHREN UND VORRICHTUNG ZUM AUSFÜHREN VON KOLLISIONSVERMEIDENDEN MASSNAHMEN**
METHOD AND DEVICE FOR PERFORMING COLLISION-AVOIDANCE MEASURES
PROCÉDÉ ET DISPOSITIF D'EXÉCUTION DE MESURES POUR ÉVITER DES COLLISIONS

(30) Priorität: 14.06.2013 DE 102013010004
(43) Veröffentlichungstag der Anmeldung: 20.04.2016
(73) Patentinhaber: Valeo Schalter und Sensoren GmbH, 74321 Bietigheim-Bissingen (DE)
(72) Erfinder: SPENCER, Martin, 21075 Hamburg (DE); KOEHLER, Michael, 22529 Hamburg (DE)
(74) Vertreter: Withopf, Kristina
(86) Internationale Anmeldenummer: PCT/EP2014/061869
(87) Internationale Veröffentlichungsnummer: WO 2014/198671

(56) Entgegenhaltungen:
- EP-A1- 2 549 456
- DE-A1-102009 047 333
- DE-A1-102009 047 333
- DE-A1-102011 080 789
- DE-A1-102012 008 660
- DE-A1-102012 009 555
- DE-A1-102012 012 591
- DE-A1-102012 012 591
- DE-A1-102012 203 187
- DE-A1-102012 203 187
- DE-A1-102012 216 986

## Beschreibung

Die Erfindung betrifft ein Verfahren zum Ausführen von kollisionsvermeidenden Maßnahmen nach dem Oberbegriff von Anspruch 1 sowie eine Vorrichtung zur Ausführung des Verfahrens.

Im Automobilbereich werden zunehmend unterschiedlichste Fahrassistenzsysteme eingesetzt, das heißt elektronische Zusatzeinrichtungen zur Unterstützung des Fahrers in bestimmten Fahrsituationen. Gemäß dem Stand der Technik sind Verfahren und Vorrichtungen bekannt, um kollisionsvermeidende Maßnahmen, insbesondere ein Bremsen oder Ausweichen eines fahrenden Kraftfahrzeugs, auszuführen.

Beispielsweise in DE 10 2005 002 760 A1 werden zur Kollisionsvermeidung Objekte in der Umgebung eines Fahrzeugs erfasst und daraus ein digitales Lagebild erstellt. Mit dem digitalen Lagebild werden dann eine Kollisionszeit und ein Kollisionsort für jedes Objekt mit dem Fahrzeug ermittelt. Aus den Parametern Kollisionszeit und Kollisionsort wird dann unter Berücksichtigung der Unsicherheit dieser Parameter eine Kollisionswahrscheinlichkeit ermittelt. Anhand dieser Kollisionswahrscheinlichkeit wird im Falle, dass eine Kollision bevorsteht, also wahrscheinlich erscheint, ein Notmanöver durch Bremsen und Ausweichen auf einer mittels des Lagebildes ermittelten Trajektorie ausgeführt.

In DE 10 2012 203 187 A1 sieht vor, dass zur Prädiktion und Adaption der Bewegungstrajektorien eines Kraftfahrzeugs eine Schnittmenge aus situativ notwendigen Bewegungstrajektorien, die mit Hilfe einer Umfeldsensorik bestimmt werden, und aus physikalisch möglichen Bewegungstrajektorien, die sich aus den fahrdynamischen Eigenschaften des Kraftfahrzeugs und dem sich zwischen Reifen und Fahrbahn einstellenden Reibbeiwert bis zu einem maximal möglichen Grenzreibbeiwert ergeben, gebildet wird, wobei ausschließlich Bewegungstrajektorien berücksichtigt werden, die sich innerhalb der Schnittmenge befinden. Damit ist gewährleistet, dass nur die Bewegungstrajektorien berücksichtigt werden, die sich aus den berechneten Bewegungstrajektorien ergebenden Radkräfte durch Kombination aus Brems- und/oder Lenkkräften unterhalb des max. möglichen Grenzreibwerts liegen.

Bei derartigen Verfahren wird der Gedanke verfolgt, dass in gewöhnlichen Fahrsituationen häufig ein Bremsen nicht mehr zur Vermeidung von Kollisionen dient, wobei ein Ausweichen oder ein Bremsen und Ausweichen eine Kollision noch verhindern kann.

Eine vollständige Kollisionsvermeidung wird jedoch nur bei geringen Geschwindigkeiten des Fahrzeugs ermöglicht, da diese Verfahren - wie auch in der o.g. Druckschrift beschrieben - Manöver im "physikalischen Grenzbereich" ausführen.

Damit das Verfahren nämlich nicht verfrüht in die Steuerung des Fahrers eingreift, solange dieser noch ein manuelles Ausweichen durchführen kann, wird das Ausführen einer Bremsung solange verzögert bzw. eine Kollision solange als unwahrscheinlich angenommen, bis das Ausweichen auf der ermittelten Trajektorie gerade noch oder sogar gerade nicht mehr an den erfassten Objekten vorbeiführt. Gerade bei höheren Geschwindigkeiten sind derartige Manöver häufig sehr gefährlich und führen daher - wenn auch mit einer reduzierten Kraft - zu einer Kollision des Fahrzeugs mit Objekten.

Der Erfindung liegt daher die Aufgabe zugrunde kollisionsvermeidende Maßnahmen so rechtzeitig auszuführen, dass auch bei höheren Geschwindigkeit eine Kollision vermieden wird, ohne frühzeitig in manuell vom Fahrer ausgeführte bzw. noch ausführbare Aktionen, insbesondere das manuelle Ausweichen, einzugreifen.

Die Erfindung löst diese Aufgabe durch ein Verfahren zum Ausführen von kollisionsvermeidenden Maßnahmen nach Anspruch 1 sowie eine Vorrichtung zur Ausführung des Verfahrens nach Anspruch 10.

Gemäß der Erfindung werden die Positionen statischer und dynamischer Objekte erfasst. Objekte sind hier insbesondere andere Fahrzeuge, Fahrbahnbegrenzungen, Gebäude oder andere Hindernisse, die auf sowie im Bereich der Fahrbahn positioniert sind. Ferner werden eine oder mehrere Trajektorien ermittelt, die vom Fahrzeug durchlaufen werden können und durch die eine Kollision des Fahrzeugs mit den Objekten vermieden werden würde.

Erfindungsgemäß wird dann für die bzw. für jede der ermittelten Trajektorien ein Gefahrenwert ermittelt. Der Gefahrenwert wird kontinuierlich oder periodisch, z.B. vorgegeben durch einen Takt eines die Daten verarbeitenden Prozessors, angepasst an die aktuelle Position des Fahrzeugs sowie der erfassten Objekte aktualisiert. Der Gefahrenwert stellt hierbei ein Maß für die Kräfte dar, die auf das Fahrzeug beim Durchlaufen der jeweiligen Trajektorie wirken würden. D.h., dass für jede Trajektorie bei einem angenommenen Durchlaufen des Fahrzeugs durch die jeweilige Trajektorie ein oder mehrere auf das Fahrzeug wirkende Kräfte ermittelt werden. Diese Kräfte werden dann für die jeweilige Trajektorie, z.B. mittels Fahrzeug spezifischer Tabellen oder mittels Fahrzeug spezifischer Funktionen der Kräfte, als Gefahrenwert zusammengefasst. Die spezifischen Tabellen oder Funktionen werden z.B. durch Verhaltensmodelle oder Fahrtests ermittelt.

Die ermittelten Gefahrenwerte werden dann mit einem zuvor, z.B. vom Fahrer oder vom Hersteller, für ein spezifisches Fahrzeug, ausgewählten oder einem, z.B. vom Hersteller, vordefinierten Schwellenwert verglichen. Im Falle, dass der, die oder einer der ermittelten Gefahrenwerte oberhalb des ausgewählten oder vordefinierten Schwellenwerts liegen, werden dann ein oder mehrere kollisionsvermeidende Maßnahmen ausgeführt.

Vorteil der Bewertung der Trajektorien mit Gefahrenwerten ist, dass bereits so früh eine kollisionsvermeidende Maßnahme ausgeführt werden kann, dass die kollisionsvermeidende Maßnahme jedenfalls eine kontrollierte Fahrzeugbewegung ermöglicht, die nicht im Bereich der physikalischen Grenzen liegt und ein möglich Kollision vermeidet.

Hierbei werden die aktuelle Geschwindigkeit und die aktuelle Beschleunigung des Fahrzeugs ermittelt und ausgehend von diesen Parametern für die oder für jede der ermittelten Trajektorien jeweils die maximale Querbeschleunigung des Fahrzeugs ermittelt, die beim Durchlaufen der jeweiligen Trajektorie auf das Fahrzeug wirkt. Diese maximale Querbeschleunigung wird mit einem Wahrscheinlichkeitswert, z.B. durch eine mathematische Operation, bewertet. Die bewertete Querbeschleunigung entspricht dann dem Gefahrenwert.

Der Wahrscheinlichkeitswert ist derart definiert, dass die bewertete Trajektorie - also die damit verbundene maximale Querbeschleunigung - tatsächlich von einem Fahrer gewählt werden würde, um kollisionsvermeidende Maßnahmen auszuführen. Der Gefahrenwert einer Trajektorie mit einer maximalen Querbeschleunigung, die zwar noch gerade ein stabiles Fahrverhalten des Fahrzeugs ermöglichen aber, von einem Fahrer - zumindest unter gewöhnlichen Umständen - nicht mehr gewählt werden würde, erhält somit z.B. einen vergleichsweise hohen Gefahrenwert, der oberhalb des Schwellenwerts liegt.

Hierdurch wird vorteilhafterweise berücksichtigt, dass ein Fahrer beim Erkennen einer Gefahrensituation, wie z.B. einer Kollision, bereits vor Erreichen der Grenze der auf das Fahrzeug wirkenden Kräfte, insbesondere der maximalen Querbeschleunigung, die ein kontrolliertes Fahrverhalten des Fahrzeug noch ermöglichen, kollisionsvermeidende Maßnahmen ausführen würde. Der Fahrer würde also - angenommen er erkennt die Gefahrensituation - nicht erst im "letzten Moment" kollisionsvermeidende Maßnahmen ausführen.

Gemäß einer weiteren vorteilhaften Ausführungsform wird die Dauer ermittelt, bis zu der durch ein Abbremsen des Fahrzeugs eine Kollision mit dem nächsten im Fahrtweg des Fahrzeugs liegenden Objekts vermieden werden würde. Es wird also z.B. zunächst der Fahrtweg, also die zukünftigen Positionen des Fahrzeugs, prädiziert und das nächste Objekt im Bereich dieses Fahrtwegs identifiziert, mit dem das Fahrzeug beim Fortsetzen der Fahrt auf dem Fahrtweg kollidieren würde. Ausgehend von der Geschwindigkeit und der Beschleunigung des Fahrzeugs sowie der Position - im Falle eines statischen Objekts - oder den prädizierten Positionen - im Falle eines dynamischen Objekts - wird dann die Dauer ermittelt, bis zu der ein Abbremsen des Fahrzeugs noch möglich ist, ohne dass das Fahrzeug und das Objekt miteinander kollidieren.

Gemäß einer ersten Alternative dieser Ausführungsform wird eine erste kollisionsvermeidende Maßnahme, z.B. ein Signalisieren mit einer optischen Anzeige, ausgeführt, wenn die Dauer einen Zeitschwellenwert unterschreitet. Gemäß einer weiteren Alternative der Ausführungsform wird eine erste kollisionsvermeidende Maßnahme, z.B. ein optisches Signalisieren, ausgeführt, wenn die Dauer einen ersten Zeitschwellenwert unterschreitet und es wird eine weitere erste kollisionsvermeidende Maßnahme, z.B. ein akustisches Signalisieren durch einen Ton oder eine Tonfolge, ausgeführt, wenn die Dauer einen weiteren Zeitschwellenwert unterschreitet. Die erste bzw. ersten kollisionsvermeidenden Maßnahmen werden ausgeführt, bevor im Falle der oder die ermittelten Gefahrenwerte oberhalb eines ausgewählten oder vordefinierten Schwellenwerts liegen und daher weitere kollisionsvermeidende Maßnahmen ausgeführt werden.

Durch die ersten kollisionsvermeidenden Maßnahmen, die abhängig von der o.g. Dauer ausgeführt werden, wird der Fahrer bereits frühzeitig auf die Gefahr hingewiesen, dass ein manuelles Bremsen und/oder Ausweichen durchgeführt werden sollte, um eine Kollision zu vermeiden.

Gemäß einer weiteren vorteilhaften Ausführungsform werden die Positionen dynamischer Objekte kontinuierlich oder periodisch prädiziert, die Trajektorien kontinuierlich oder periodisch an die prädizierten Positionen angepasst und die Gefahrenwerte für die Trajektorien kontinuierlich oder periodisch ermittelt. Dadurch wird ermöglicht, dass trotz variierender Position der dynamischen Objekte kollisionsvermeidende Maßnahmen jederzeit korrekt, auch bei sich verändernden Umgebungssituationen, ausgeführt werden.

Erfindungsgemäß wird im Falle, dass mehrere Trajektorien ermittelt werden, auf deren Fahrt eine Kollision des Fahrzeugs mit den erfassten Objekten vermieden werden würde, immer die Trajektorie gewählt wird, deren Gefahrenwert die geringste ermittelte maximale Querbeschleunigung aufweist. Eine oder mehrere kollisionsvermeidende Maßnahmen werden dann ausgeführt, wenn der Gefahrenwert der ausgewählten Trajektorie oberhalb des ausgewählten oder vordefinierten Schwellenwerts liegt. Vorteil ist, dass nur ein Vergleich eines Gefahrenwerts mit dem Schwellenwert nötig ist, um kollisionsvermeidende Maßnahmen rechtzeitig auszuführen.

Gemäß einer bevorzugten Ausführungsform umfassen die kollisionsvermeidenden Maßnahmen ein Abbremsen des Fahrzeugs. Das Abbremsen kann z.B. durch ansteuern einer Bremssteuerung, z.B. einen Bremskontroller, des Fahrzeugs erfolgen, die bzw. der dann eine Betätigung der Bremsen des Fahrzeugs ausführt.

Gemäß einer weiteren bevorzugten Ausführungsform umfassen die kollisionsvermeidenden Maßnahmen das Abbremsen des Fahrzeugs. Gemäß einer ersten Alternative des Ausführungsbeispiels erfolgt das Abbremsen durch intervallweises Abbremsen, also Aktivieren der Bremsen des Fahrzeugs. Hierbei erfolgt das Abbremsen in mehreren Intervallen mit gleichen oder unterschiedlichen Bremskräften. Gemäß einer weiteren Alternative des Ausführungsbeispiels erfolgt das Abbremsen kontinuierlich, insbesondere bis zum Stillstand des Fahrzeugs. Während des kontinuierlichen Bremsvorgangs ist die Bremskraft entweder konstant oder die Bremskraft wird erhöht oder reduziert. Denkbar ist z.B. ein Abbremsen innerhalb einer ersten Periode von z.B. einer Sekunde mit einer geringen Bremskraft auf die eine zweite Periode z.B. bis zum Stillstand folgt, in der eine vergleichsweise höhere Bremskraft ausgeübt wird.

Gemäß einer weiteren bevorzugten Ausführungsform besteht eine kollisionsvermeidende Maßnahme aus dem Signalisieren eines Signals im Innenraum des Fahrzeugs. Hierdurch wird der Fahrer auf eine Gefahrensituation hingewiesen, so dass dieser ggf. noch durch ein manuell ausgeführtes Fahrmanöver eine mögliche Kollision vermeiden kann.

Gemäß einer weiteren bevorzugten Ausführungsform besteht das Signalisieren mit einem Signal aus dem Anzeigen eines optischen Signals, der Wiedergabe eines Tons oder einer Tonfolge und/oder dem haptischen Signalisieren für den Fahrer des Fahrzeugs. Durch ein derartiges Signalisieren wird der Fahrer gezielt auf eine Gefahrensituation hingewiesen, wobei die Art des Signals an die Gegebenheiten des Fahrzeugs oder individuell an den Fahrer angepasst sein kann.

Gemäß einer weiteren bevorzugten Ausführungsform wird das Ausführen einer kollisionsvermeidenden Maßnahme durch Eingreifen des Fahrers in die Steuerung des Fahrzeugs, z.B. durch manuelle Bremsung oder durch ein Ausweichen, unterbrochen. Vorteilhafterweise wird dieses Unterbrechen nur dann durchgeführt, wenn der oder die Gefahrenwerte durch dieses Eingreifen des Fahrers wieder Werte unter dem Schwellenwert aufweisen. Hierdurch wird z.B. verhindert, dass das Fahrzeug komplett abgebremst wird, obwohl die Gefahrensituation vom Fahrer aufgehoben wurde.

Gemäß einer weiteren bevorzugten Ausführungsform ist der Schwellenwert ein von mehreren auswählbaren Schwellenwerten ausgewählter Schwellenwert. Die auswählbaren Schwellenwerte entsprechen mehreren zuvor festgelegten bzw. vordefinierten Schwellenwerten. Diese Schwellenwerte kann der Fahrer z.B. auswählen, um besonders frühzeitig im Falle einer Kollisionsgefahr auf diese Gefahr hingewiesen zu werden. Ferner ermöglicht die Auswahl eines derartigen Schwellenwertes ein besonders frühzeitiges, automatisches Abbremsen im Falle einer drohenden Kollisionsgefahr, wenn der Fahrer dies wünscht. Im Falle, dass der Fahrer ein besonders spätes Eingreifen durch das Verfahren wünscht, wird dann z.B. ein anderer Schwellenwert ausgewählt.

Weitere Ausführungsformen der Erfindung ergeben sich aus den Unteransprüchen sowie aus den anhand der Zeichnung näher erläuterten Ausführungsbeispielen. In der Zeichnung zeigen:
- Fig. 1: den Ablauf eines Ausführungsbeispiels des erfindungsgemäßen Verfahrens,
- Fig. 2: die Ausführung aufeinander folgender erster und weiterer kollisionsvermeidender Maßnahmen und
- Fig. 3a-c: das Ermitteln kollisionsvermeidender Trajektorien.

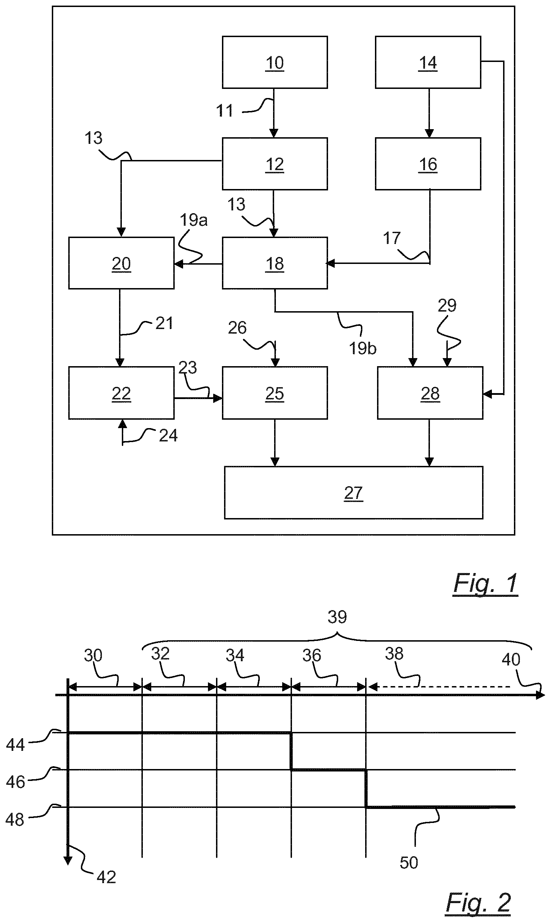

Fig. 1 zeigt den Ablauf eines Ausführungsbeispiels des erfindungsgemäßen Verfahrens. Gemäß dem Verfahren werden in einem Schritt 10 zunächst Positionen von Objekten 11 erfasst. Das Erfassen erfolgt z.B. durch Laserabtastung mit einem an einem Fahrzeug angebrachten Laserscanner. Diese Objekte 11 können statische Objekte, z.B. parkende Fahrzeuge und/oder Wegbegrenzungen, und dynamische Objekte, z.B. vorausfahrende oder begegnende Fahrzeuge, sein. Beim Erfassen werden alle Objekte 11 in der Umgebung des Fahrzeugs detektiert, um deren Positionen simultan zu verarbeiten.

Für die dynamischen Objekte 11 werden dann in einem Schritt 12, mittels zusätzlich erfasster Bewegungen der dynamischen Objekte 11, zukünftige Positionen 13 prädiziert. Es wird also die erwartete Bewegung der Objekte 11 vorbestimmt.

Ferner wird die Bewegung, insbesondere die Geschwindigkeit und die Beschleunigung, des Fahrzeugs, also des "Eigenfahrzeugs", mit dem das Verfahren ausgeführt wird, in einem Schritt 14 erfasst. Unter Berücksichtigung der aktuellen Geschwindigkeit sowie der aktuellen Beschleunigung wird dann im Schritt 16 ein Fahrtweg 17 prädiziert, den das Fahrzeug vermutlich durchfahren wird. Mit dem prädizierten Fahrtweg 17 des Fahrzeugs sowie der Positionen und zukünftigen Positionen 13 der erfassten Objekte 11 werden in einem Schritt 18 Objekte 19a identifiziert, die vermutlich im Bereich des Fahrtweges des Fahrzeugs liegen. Zusätzlich wird in diesem Schritt 18 das Objekt 19b bestimmt, das vermutlich als nächstes im Fahrtweg des Fahrzeugs liegt, also das nächstliegende Hindernis für das Fahrzeug darstellt.

Im Schritt 20 werden dann aus den aktuellen und zukünftigen Positionen 13 der erfassten Objekte 19b alle möglichen Trajektorien 21, also Bahnkurven, ermittelt, die das Fahrzeug kollisionsfrei an den erfassten Objekten 19b vorbeiführen. Vorzugsweise werden die Positionen 13 der Objekte 19b und somit auch die möglichen Trajektorien 21 kontinuierlich oder periodisch aktualisiert.

Die ermittelten Trajektorien 21 werden dann in einem Schritt 22 bewertet, es wird dabei für jede der Trajektorien 21 ein Gefahrenwert 23 ermittelt. Der Gefahrenwert 23 einer Trajektorie 21 stellt ein Maß für eine oder mehrere Kräfte dar, die auf das Fahrzeug beim Durchlaufen der jeweiligen Trajektorie 21 wirken würden. Gemäß einem Ausführungsbeispiel wird - ausgehend von der aktuellen Geschwindigkeit und Beschleunigung des Fahrzeugs - die maximale Querbeschleunigung, die auf das Fahrzeug beim Durchlaufen der jeweiligen Trajektorie 21 wirken würde, ermittelt. Diese maximale Querbeschleunigung wird dann mit einem Wahrscheinlichkeitswert 24 bewertet, der ein Maß dafür darstellt, ob der Fahrer ein Ausweichmanöver mit einer der ermittelten Querbeschleunigung vergleichbaren Querbeschleunigung ausführen würde. Das Ergebnis dieser Bewertung, also die bewertete Querbeschleunigung, wird dann der jeweiligen Trajektorie 21 als Gefahrenwert 23 zugeordnet. Entsprechend der o.g. kontinuierlichen oder periodischen Aktualisierung der Trajektorien 21, werden auch die Gefahrenwerte 23 kontinuierlich oder periodisch aktualisiert.

Im darauf folgenden Schritt 25 werden die ermittelten Gefahrenwerte 23 mit einem Schwellenwert 26 verglichen. Treten alle Gefahrenwerte 23 bei der Aktualisierung der Gefahrenwerte über den Schwellenwert, so wird im Schritt 27 eine kollisionsvermeidende Maßnahme, insbesondere ein Abbremsen des Fahrzeugs, ausgeführt. Es wird also eine kollisionsvermeidende Maßnahme ausgeführt, wenn jede ermittelte an dem oder den Hindernissen (Objekten 19a) vorbeiführende Trajektorie 21 eine Querbeschleunigung auf das Fahrzeug ausüben würde, die der Fahrer mit einer hohen Wahrscheinlichkeit 24 nicht wählen würde. Das bedeutet, wenn eine kollisionsvermeidende Maßnahme ausgeführt wird, diese Maßnahme so rechtzeitig erfolgt, dass zwar noch das Durchlaufen von Trajektorien 21 möglich wäre, die kollisionsfrei an den Objekten 19a vorbei führen würden, aber diese Maßnahme gleichzeitig so spät erfolg, dass ein Eingreifen des Fahrers unwahrscheinlich ist, der Fahrer die Gefahrensituation also nicht erkannt hat.

Gemäß diesem Ausführungsbeispiel wird zusätzlich anhand der im Schritt 14 ermittelten Geschwindigkeit und Bewegung sowie anhand der im Schritt 18 ermittelten Position des nächsten im Fahrtweg des Fahrzeugs liegenden Objekts 19b im Schritt 28 die Dauer ermittelt, bis zu der ein Ausführen eines Abbremsens, insbesondere bei der Weiterverfolgung des Fahrtweges 17, noch möglich ist, um eine Kollision mit diem nächstliegenden Objekt 19b zu vermeiden. Diese Dauer wird mit einem oder mehreren Zeitschwellenwerten 29 verglichen und beim Unterschreiten bzw. jeweils beim Unterschreiten eines der Zeitschwellenwerte 29 wird eine erste kollisionsvermeidende Maßnahme, insbesondere ein optisches oder akustisches Signalisieren im Fahrzeuginnenraum, ausgeführt.

Die Ausführung aufeinander folgender erster und weiterer kollisionsvermeidender Maßnahmen, wie sie im Schritt 27 erfolgt wird gemäß einem Ausführungsbeispiel in Fig. 2 dargestellt.

Fig. 2 zeigt in den Bereichen 30 bis 38 eine Fahrsituationen des Fahrzeugs. In den Bereichen 32 bis 38 werden aufeinander folgend verschiedene kollisionsvermeidende Maßnahmen 39 ausgeführt. Diese sind auf einer Zeitachse 40 aufgetragen. Über der Achse 42 ist die negative Beschleunigung, also die Abbremskraft, die durch Abbremsen auf das Fahrzeug beim Abbremsen wirkt, dargestellt. Die Linie 44 entspricht der Nulllinie, bei der das Fahrzeug also nicht abgebremst wird. Die Linie 46 entspricht einem Abbremsen mit einer ersten geringen Kraft und die Linie 48 einem Abbremsen mit einer zweiten vergleichsweise höheren Kraft. Das Eingreifen durch kollisionsvermeidende Maßnahmen 39 im Gefahrenfall wird durch die (fette) Kurve 50 dargestellt.

Im ersten Bereich 30 befindet sich das Fahrzeug in normaler Fahrt. Im zweiten Bereich 32 unterschreitet die ermittelte Dauer, bis zu der ein Bremsen ausgeführt werden muss, um eine Kollision mit einem nächstliegenden Objekt 19b im Fahrtweg zu vermeiden, einen ersten Zeitschwellenwert 29. In diesem Bereich 32 wird eine erste kollisionsvermeidende Maßnahme 39 ausgeführt. Z.B. wird dem Fahrer optisch angezeigt, dass ein Bremsen bald erfolgen sollte. Im Bereich 34 unterschreitet die ermittelte Dauer einen weiteren Zeitschwellenwert 29, da sich das Fahrzeug z.B. weiter an ein Objekt 19b nähert. Hier wird eine weitere kollisionsvermeidende Maßnahme 39 ausgeführt. Der Fahrer wird z.B. akustisch über einen Ton oder eine Tonfolge darauf hingefahren, dass die Gefahr der Kollision gestiegen ist und ein sofortiges Bremsen erfolgen sollte.

Reagiert der Fahrer nicht durch manuelles Bremsen, so steigen die Gefahrenwerte 23 der möglichen Trajektorien 21, da ein Ausweichen nur noch mit immer höheren Querbeschleunigungen möglich wäre. In den Bereich 36 und 38 übersteigen die Gefahrenwerte 23 der Trajektorien 21 dann den Schwellenwert 26 und eine weitere kollisionsvermeidende Maßnahme 39 wird ausgeführt. Das Fahrzeug wird abgebremst. Im Bereich 36 wird das Fahrzeug zunächst, z.B. für eine Sekunde leicht abgebremst, um dem Fahrer die Möglichkeit zu geben, manuell eine Kollision zu vermeiden. Reagiert der Fahrer weiterhin nicht, so wird im Bereich 38 das Fahrzeug stark abgebremst, bis dies z.B. zum Stehen kommt.

Gemäß einem Ausführungsbeispiel sind die Zeitschwellenwerte 29, sowie die Stärke und Dauer der Abbremsung konfigurierbar.

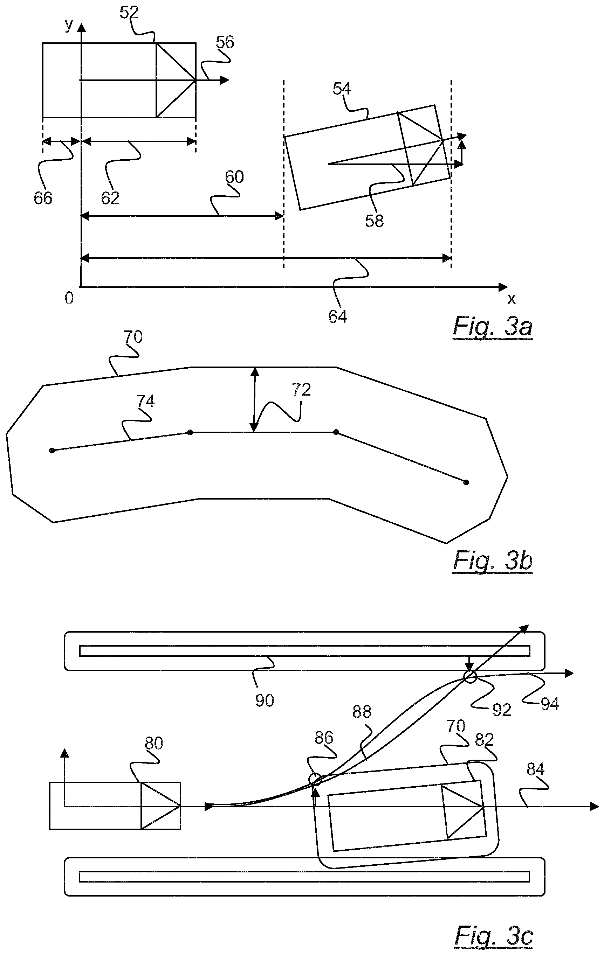

Die Fig. 3a bis 3c zeigen die detaillierte Ermittlung der Trajektorien 21, die an ermittelten Objekten 19a vorbeiführen, gemäß einem Ausführungsbeispiel der Erfindung.

Fig. 3a zeigt dabei das Fahrzeug 52, das dem Eigenfahrzeug entspricht, und ein erfasstes Objekt 54, das z.B. einem weiteren Fahrzeug entspricht und sich im Fahrtweg des Fahrzeugs 52 befindet. Ausgehend von einem Koordinatensystem mit den Achsen x und y bewegt sich das Fahrzeug 52 mit einer Geschwindigkeit 56 in eine Richtung x. Das Objekt 54 bewegt sich ebenfalls und entspricht somit einem dynamischen Objekt. Hierbei bewegt sich das Objekt 54 in eine andere Richtung als das Fahrzeug 52, wobei sich das Objekt 54 beim Zerlegen der Richtungskomponenten mit einer Geschwindigkeit 58 ebenfalls in Richtung x bewegt.

Es werden die Zeiten ermittelt, die das Fahrzeug 52 bis zum Erreichen und die das Fahrzeug 52 bis zum Passieren des Objekts 54 benötigt. Die Zeit bis zum Erreichen des Objekts errechnet sich aus der Differenz des minimalen Abstands 60 des Objekts 54 zum Nullpunkt der x-Achse und dem maximalen Abstand 62 des Fahrzeugs 52 zum Nullpunkt der x-Achse dividiert durch die Differenz der Geschwindigkeit 56 des Fahrzeugs 52 und der Geschwindigkeit 58 des Objekts 54 in x-Richtung. Die Zeit bis zum Passieren des Objekts erreicht sich aus der Differenz des maximalen Abstands 64 des Objekts 54 zum Nullpunkt der x-Achse und dem minimalen Abstand 66 des Fahrzeugs 52 zum Nullpunkt der x-Achse dividiert durch die Differenz der Geschwindigkeit 56 des Fahrzeugs 52 und der Geschwindigkeit 58 des Objekts 54 in x-Richtung.

Zur Ermittlung der Trajektorien 21 wird dann zu beiden errechneten Zeiten bzw. Zeitpunkten die Position des Objekts 54 prädiziert und eine Trajektorie 21 ermittelt, die an diesen beiden Positionen des Objekts 54 sowie dem Weg, den das Objekt 54 zwischen diesen beiden Positionen zurücklegt, vorbeiführt.

Fig. 3b zeigt eine Region 70, in der sich das Fahrzeug 52 aufgrund erfasster Objekte 11 nicht bewegen kann, die also nicht als Trajektorie 21 durchlaufen werden kann. Dabei wird angenommen, dass sich Objekte 11 auf der Kurve 74 befinden. Um diese Kurve 74 wird eine Region 70 definiert, die immer einen Abstand 72 von der Kurve 74, also von den Objekten 11, aufweist, die mindestens der halben Breite des Fahrzeugs 52 entspricht. Diese Region 70, wird bei der Bestimmung durch versetzte Geraden an eine geglättete (hier konvexe) Form angenähert.

Fig. 3c zeigt die Ermittlung der Trajektorien 21 gemäß einem Ausführungsbeispiel anhand von Kontrollpunkten, durch die kubische Splines bzw. kubische Polynomzüge gelegt werden. Hierzu wird eine eindimensionale Darstellung des Fahrzeugs sowie der ermittelten Objekte 11 gewählt. Fig. 3c zeigt dazu ein Fahrzeug 80 sowie ein erfasstes Objekt 82, das hier als parkendes weiteres Fahrzeug, also als ein statisches Objekt, dargestellt ist. Um das Fahrzeug herum ist die in Fig. 3b dargestellte Region 70 dargestellt. Zunächst wird ein Fahrtweg 84 angenommen. Hier stellt das erfasste Objekt 82 ein Hindernis dar. Darauf hin wird ein Kontrollpunkt 86 an der Ecke des Objekts 82, zzgl. einem Sicherheitsabstand definiert durch die Region 70, generiert. Durch diesen Kontrollpunkt 86 wird ein kubischer Spline 88 gelegt. Dieser trifft in seinem Verlauf auf ein weiteres Objekt 90. Es wird wie zuvor ein neuer Kontrollpunkt 92 und ein neuer Spline 94 erzeugt, der durch den zweiten Kontrollpunkt 92 verläuft und damit auch am zweiten Objekt vorbeiführt. Somit werden geglättete Bahnkurven, also Trajektorien 21, erzeugt, deren Durchlaufen vom Fahrzeug Kollisionen vermeiden würden.

## Patentansprüche

1. Verfahren zum Ausführen einer oder mehrerer kollisionsvermeidender Maßnahmen (39) bei einem Fahrzeug (52, 80), insbesondere einem Kraftfahrzeug, mit folgenden Schritten:
- Erfassen (10) von Positionen (13) statischer und dynamischer Objekte (54, 82, 90) und
- Ermitteln (20) einer oder mehrerer Trajektorien (21), die Kollisionen des Fahrzeugs (52, 80) mit den erfassten Objekten (54, 82, 90) vermeiden,
- Ermitteln (22) eines Gefahrenwertes (23) für die oder jeweils für jede der ermittelten Trajektorien (21), wobei der Gefahrenwert (23) kontinuierlich oder periodisch ermittelt wird und ein Maß für eine oder mehrere Kräfte darstellt, die auf das Fahrzeug (52, 80) beim Durchlaufen der jeweiligen Trajektorie (21) wirken würden, wobei zum Ermitteln (22) des Gefahrenwerts (23) einer Trajektorie (21) ausgehend von der aktuellen Geschwindigkeit (56) und Beschleunigung des Fahrzeugs (52, 80), die maximale Querbeschleunigung des Fahrzeugs (52, 80) beim Durchlaufen der jeweiligen Trajektorie (21) ermittelt wird, diese Querbeschleunigung mit einem Wahrscheinlichkeitswert (24) bewertet wird, wobei der Wahrscheinlichkeitswert (24) ein Maß dafür darstellt, ob der Fahrer ein Manöver mit einer der ermittelten Querbeschleunigung vergleichbaren Querbeschleunigung ausführen würde, wobei die bewertete Querbeschleunigung dann dem Gefahrenwert (23) entspricht,
- Ausführen (27) der kollisionsvermeidenden Maßnahmen (39) im Falle, dass der ermittelte Gefahrenwert (23) einer ermittelten Trajektorie (21) oberhalb eines ausgewählten oder vordefinierten Schwellenwerts (26) liegt und
- im Falle mehrerer ermittelter Trajektorien (21), der Gefahrenwert (23) derjenigen Trajektorie (21) mit der geringsten ermittelten maximalen Querbeschleunigung ausgewählt wird und die kollisionsvermeidenden Maßnahmen (39) ausgeführt werden, wenn der ausgewählte Gefahrenwert (23) oberhalb des ausgewählten oder vordefinierten Schwellenwerts (26) liegt.

2. Verfahren nach Anspruch 1,
**dadurch gekennzeichnet, dass**
die Dauer ermittelt (28) wird, bis zu der durch ein Abbremsen des Fahrzeugs (52, 80) eine Kollision mit dem nächsten im Fahrtweg des Fahrzeugs (52, 80) liegenden Objekts (54, 82, 90) vermieden wird, eine erste kollisionsvermeidende Maßnahme (39) beim Unterschreiten der Dauer unter einen Zeitschwellenwert (29) oder mehrere kollisionsvermeidende Maßnahme (39) jeweils beim Unterschreiten eines von mehreren Zeitschwellenwerten (29) ausgeführt werden, bevor der oder die Gefahrenwerte (23) oberhalb des Schwellenwerts (26) liegen.

3. Verfahren nach einem der vorhergehenden Ansprüche,
**dadurch gekennzeichnet, dass**
zum Ermitteln (20) einer oder mehrerer Trajektorien (21) für das Fahrzeug (52, 80) die Positionen dynamischer Objekte (54) kontinuierlich oder periodisch prädiziert (12) werden und die Trajektorien (21) kontinuierlich oder periodisch an die prädizierten Positionen (19b) angepasst werden.

4. Verfahren nach einem der vorhergehenden Ansprüche,
**dadurch gekennzeichnet, dass**
eine kollisionsvermeidende Maßnahme (39) aus dem Abbremsen des Fahrzeugs (52, 80) besteht.

5. Verfahren nach Anspruch 4,
**dadurch gekennzeichnet, dass**
eine kollisionsvermeidende Maßnahme (39) aus dem Abbremsen des Fahrzeugs (52, 80) besteht, wobei das Abbremsen durch Intervalle mit den gleichen oder unterschiedlichen Bremskräften oder durch eine kontinuierlich ausgeübte Bremskraft mit konstanter, steigender oder abnehmender Bremskraft erfolgt.

6. Verfahren nach einem der vorhergehenden Ansprüche,
**dadurch gekennzeichnet, dass**
eine kollisionsvermeidende Maßnahme (39) aus dem Signalisieren eines Signals im Innenraum des Fahrzeugs (52, 80) besteht.

7. Verfahren nach Anspruch 6,
**dadurch gekennzeichnet, dass**
das Signalisieren des Signals aus dem Anzeigen eines optischen Signals, der Wiedergabe eines Tons oder einer Tonfolge und/oder dem haptischen Signalisieren für den Fahrer des Fahrzeugs (52, 80) besteht.

8. Verfahren nach einem der vorhergehenden Ansprüche,
**dadurch gekennzeichnet, dass**
das Ausführen einer kollisionsvermeidenden Maßnahme (39) durch Eingreifen des Fahrers in die Steuerung, insbesondere durch manuelle Bremsung, unterbrochen wird.

9. Verfahren nach einem der vorhergehenden Ansprüche,
**dadurch gekennzeichnet, dass**
der Schwellenwert (26) ein ausgewählter Schwellenwert (26) ist und vor dem Ausführen des Verfahrens durch Auswahl von mehreren vordefinierten Schwellenwerten (26) festgelegt wird.

10. Vorrichtung zur Durchführung eines Verfahren nach einem der Ansprüche 1 bis 9 mit Mitteln zum Erfassen von Positionen statischer und dynamischer Objekte (54, 82, 90), Mitteln zum Ermitteln einer oder mehrere Trajektorien (21) für das Fahrzeug (52, 80), die Kollisionen mit den erfassten Objekten (54, 82, 90) vermeiden, Mittel zum Ermitteln eines Gefahrenwertes (23) für die oder für jede der ermittelten Trajektorien (21) und Mittel zum Ausführen der kollisionsvermeidenden Maßnahmen (39).

## Claims

1. Method for carrying out one or more collision-avoiding measures (39) in a vehicle (52, 80), in particular a motor vehicle, comprising the following steps:
- detecting (10) positions (13) of static and dynamic objects (54, 82, 90), and
- determining (20) one or more trajectories (21) which avoid collisions of the vehicle (52, 80) with the detected objects (54, 82, 90),
- determining (22) a danger value (23) for the determined trajectory (21) or respectively for each of the determined trajectories (21), wherein the danger value (23) is determined continuously or periodically and is a measure of one or more forces which would act on the vehicle (52, 80) when the respective trajectory (21) is passed through, wherein, in order to determine (22) the danger value (23) of a trajectory (21) on the basis of the current speed (56) and acceleration of the vehicle (52, 80), the maximum lateral acceleration of the vehicle (52, 80) is determined when the respective trajectory (21) is passed through, this lateral acceleration is evaluated with a probability value (24), wherein the probability value (24) constitutes a measure of whether the driver would carry out a manoeuvre with a lateral acceleration which is comparable with the determined lateral acceleration, wherein the evaluated lateral acceleration then corresponds to the danger value (23),
- carrying out (27) the collision-avoiding measures (39) in the event of the determined danger value (23) of a determined trajectory (21) being above a selected or predefined threshold value (26) and
- in the event of a plurality of trajectories (21) being determined, the danger value (23) of that trajectory (21) with the lowest determined maximum lateral acceleration is selected and the collision-avoiding measures (39) are carried out if the selected danger value (23) is above the selected or predefined threshold value (26).

2. Method according to Claim 1,
**characterized in that**
the period of time up to which a collision with the closest object (54, 82, 90) located in the travel path of the vehicle (52, 80) is avoided by braking the vehicle (52, 80) is determined (28), and a first collision-avoiding measure (39) is carried out when the period of time undershoots a time threshold value (29) or a plurality of collision-avoiding measures (39) are respectively carried out when one of a plurality of time threshold values (29) are undershot before the danger value (23) or danger values (23) is/are above the threshold value (26).

3. Method according to one of the preceding claims,
**characterized in that**
in order to determine (20) one or more trajectories (21) for the vehicle (52, 80), the positions of dynamic objects (54) are predicted (12) continuously or periodically, and the trajectories (21) are adapted to the predicted positions (19b) continuously or periodically.

4. Method according to one of the preceding claims,
**characterized in that**
a collision-avoiding measure (39) comprises the braking of the vehicle (52, 80).

5. Method according to Claim 4,
**characterized in that**
a collision-avoiding measure (39) comprises the braking of the vehicle (52, 80), wherein the braking takes place by means of intervals with the same or different braking forces or by means of a continuously applied braking force with constant increasing or decreasing braking force.

6. Method according to one of the preceding claims,
**characterized in that**
a collision-avoiding measure (39) comprises signalling a signal in the passenger compartment of the vehicle (52, 80).

7. Method according to Claim 6,
**characterized in that**
the signalling of the signal comprises displaying a visual signal, playing back a sound or a sound sequence and/or the haptic signalling for the driver of the vehicle (52, 80).

8. Method according to one of the preceding claims,
**characterized in that**
the execution of a collision-avoiding measure (39) is interrupted by the intervention of the driver in the control, in particular by means of manual braking.

9. Method according to one of the preceding claims,
**characterized in that**
the threshold value (26) is a selected threshold value (26) and is defined by making a selection from a plurality of predefined threshold values (26), before the method is carried out.

10. Device for carrying out a method according to one of Claims 1 to 9, having means for detecting positions of static and dynamic objects (54, 82, 90), means for determining one or more trajectories (21) for the vehicle (52, 80), which avoid collisions with the detected objects (54, 82, 90), means for determining a danger value (23) for the determined trajectories (21), or for each of the determined trajectories (21), and means for carrying out the collision-avoiding measures (39).

## Revendications

1. Procédé d'exécution d'une ou de plusieurs mesures pour éviter des collisions (39) sur un véhicule (52, 80), en particulier un véhicule automobile, comprenant les étapes suivantes consistant à :
- détecter (10) des positions (13) d'objets statiques et dynamiques (54, 82, 90), et
- établir (20) une ou plusieurs trajectoires (21) qui évitent les collisions du véhicule (52, 80) avec les objets détectés (54, 82, 90),
- établir (22) une valeur de danger (23) pour la ou respectivement pour chacune des trajectoires établies (21), dans lequel la valeur de danger (23) est établie continuellement ou périodiquement et est une mesure d'une ou de plusieurs forces qui agiraient sur le véhicule (52, 80) s'il parcourait la trajectoire respective (21), dans lequel, pour l'établissement (22) de la valeur de danger (23) d'une trajectoire (21) en partant de la vitesse actuelle (56) et de l'accélération du véhicule (52, 80), l'accélération latérale maximale du véhicule (52, 80) lorsqu'il parcourt la trajectoire respective (21) est déterminée, cette accélération latérale étant évaluée par une valeur de probabilité (24), la valeur de probabilité (24) étant une mesure pour savoir si le conducteur exécuterait une manœuvre avec une accélération latérale comparable à une accélération latérale établie, l'accélération latérale évaluée correspondant alors à la valeur de danger (23),
- exécuter (27) les mesures pour éviter des collisions (39) au cas où la valeur de danger établie (23) d'une trajectoire établie (21) se situe au-dessus d'une valeur seuil (26) sélectionnée ou prédéfinie, et
- dans le cas de plusieurs trajectoires établies (21), la valeur de danger (23) de la trajectoire (21) ayant la plus petite accélération latérale maximale établie est sélectionnée, et les mesures pour éviter des collisions (39) sont exécutées si la valeur de danger sélectionnée (23) est située au-dessus de la valeur seuil (26) sélectionnée ou prédéfinie.

2. Procédé selon la revendication 1, **caractérisé en ce que** la durée (28) est établie pendant laquelle une collision avec l'objet (54, 82, 90) suivant sur le trajet du véhicule (52, 80) est évitée par un freinage du véhicule (52, 80), une première mesure pour éviter des collisions (39) est exécutée en cas de soupassement de la durée sous une valeur seuil de temps (29), ou plusieurs mesures pour éviter des collisions (39) sont exécutées respectivement en cas de soupassement d'une parmi plusieurs valeurs seuil de temps (29) avant que la ou les valeurs de danger (23) ne se situent au-dessus de la valeur seuil (26).

3. Procédé selon l'une quelconque des revendications précédentes, **caractérisé en ce que** pour l'établissement (20) d'une ou de plusieurs trajectoires (21) pour le véhicule (52, 80), les positions d'objets dynamiques (54) sont prédites (12) continuellement ou périodiquement, et les trajectoires (21) sont adaptées continuellement ou périodiquement aux positions prédites (19b).

4. Procédé selon l'une quelconque des revendications précédentes, **caractérisé en ce qu'**une mesure pour éviter des collisions (39) consiste à freiner le véhicule (52, 80).

5. Procédé selon la revendication 4, **caractérisé en ce qu'**une mesure pour éviter des collisions (39) consiste à freiner le véhicule (52, 80), le freinage étant effectué par des intervalles avec des forces de freinage identiques ou différentes ou par une force de freinage exercée en continu ayant une force de freinage constante, croissante ou décroissante.

6. Procédé selon l'une quelconque des revendications précédentes, **caractérisé en ce qu'**une mesure pour éviter des collisions (39) consiste à émettre un signal dans l'habitacle du véhicule (52, 80).

7. Procédé selon la revendication 6, **caractérisé en ce que** l'émission du signal consiste à afficher un signal optique, à reproduire un son ou une séquence de sons et/ou à émettre un signal haptique destiné au conducteur du véhicule (52, 80).

8. Procédé selon l'une quelconque des revendications précédentes, **caractérisé en ce que** l'exécution d'une mesure pour éviter des collisions (39) est interrompue par une intervention du conducteur dans la commande, en particulier par un freinage manuel.

9. Procédé selon l'une quelconque des revendications précédentes, **caractérisé en ce que** la valeur seuil (26) est une valeur seuil sélectionnée (26), et est fixée par la sélection parmi plusieurs valeurs seuil (26) prédéfinies avant l'exécution du procédé.

10. Dispositif d'exécution d'un procédé selon l'une quelconque des revendications 1 à 9, comprenant des moyens pour détecter des positions d'objets statiques et dynamiques (54, 82, 90), des moyens pour établir une ou plusieurs trajectoires (21) pour le véhicule (52, 80) qui évitent les collisions avec les objets détectés (54, 82, 90), des moyens pour établir une valeur de danger (23) pour la ou pour chacune des trajectoires établies (21), et des moyens pour exécuter des mesures pour éviter des collisions (39).
